(19)

Europäisches
Patentamt
European
Patent Office
Office européen
des brevets

(11) **EP 2 395 697 A1**

(12) **EUROPEAN PATENT APPLICATION**

(43) Date of publication:
**14.12.2011 Bulletin 2011/50**

(51) Int Cl.:
***H04L 9/06*** (2006.01)

(21) Application number: **11169661.3**

(22) Date of filing: **13.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.06.2010 IT AN20100095**

(71) Applicant: **Scala, Guiseppe
80053 Castellammare di stabia (NA) (IT)**

(72) Inventor: **Scala, Guiseppe
80053 Castellammare di stabia (NA) (IT)**

(74) Representative: **Baldi, Claudio
Ing. Claudio Baldi S.r.l.
Viale Cavallotti, 13
60035 Jesi (Ancona) (IT)**

(54) **Method for cryptography of a binary file**

(57)  A symmetric method for cryptography of a binary file is disclosed, comprising decomposition of the binary file in blocks (A1, ... An) of 256 bytes. Said system provides for the use of passkeys (P1, P2, P3) composed of integers and of an encryption function (F) that returns a position value (c) according to the passkey. So, at least one counter text (S1) is generated, being composed of one string of 256 bytes containing position values (c) calculated starting from an initial sequence (S0) and at least one notation of memory ($N_{11}$, ... $N_{33}$) composed of one string of 256 bytes containing position values (c) calculated starting from the counter text (S1). The byte values of the counter text (S1) and notation of memory ($N_{11}$, ... $N_{33}$) are used to code the blocks of the binary file and decode the coded blocks.

EP 2 395 697 A1

**Description**

The present patent application for industrial invention relates to a method for cryptography used to code and decode any binary file. Such a method for cryptography applies to any binary sequence and can be also used to protect data communication in addition to storage.

As it is known, all types of files that can be stored in a memory support and read by any type of processor are binary files composed of a sequence of 1 and 0.

In order to prevent said files from being read by unauthorized persons, methods for cryptography are known that are adapted to code the file according to a password, making it illegible, in such a way to obtain an encrypted file. Clearly, said methods for cryptography provide for decoding the encrypted file with the same coding password or a different decoding password known by the authorized person.

The European patent EP1 895 707(B1) discloses a stenographic method for cryptography.

The European patent EP1 456 997(B1) discloses a method for symmetric cryptography.

The methods for cryptography according to the prior art mix the bits of binary files randomly. However, said methods for cryptography are generally impaired by two types of drawbacks:

1) They are based on very complex calculation algorithms that require a calculator with very high calculation power and consequently very long coding and decoding time.
2) They are unsafe and unreliable, meaning that they can be easily decoded by unauthorized persons.

The purpose of the present invention is to eliminate the drawbacks of the prior art by disclosing a method for cryptography that is safe and reliable, and at the same time effective and adapted to allow for coding and decoding very long files in a very short time.

This purpose is achieved according to the invention, with the characteristics illustrated in the attached independent claim 1.

Advantageous embodiments are disclosed in the dependent claims.

The method for cryptography of a binary file according to the invention comprises the following steps:

a) decomposition of the binary file in a plurality of blocks composed of one byte string of max. 256 bytes,
b) insertion of at least one passkey composed of an integer of at least one digit,
c) generation of an initial sequence composed of a string of 256 bytes in increasing order,
d) use of a function that returns a position value according to the passkey used, upon variation of a control variable that ranges from 1 to 256,
e) generation of at least one counter text composed of one string of 256 bytes starting from the initial sequence, applying the passkey to the function and including the values obtained at the position of the initial string in an ordered way,
f) generation of at least one notation of memory composed of one string of 256 bytes starting from the counter text, applying the passkey to the function and including the position values obtained in the notation of memory in an ordered way,
g) search of the byte values of each block of the binary file in the counter text, in such a way to find the corresponding position of the searched byte in the counter text,
h) reading in the notation of memory of the byte value at the position found in the counter text, and
i) replacement in the block of the binary type of the initial byte with the corresponding byte read in the notation of memory, in such a way to obtain a coded block.

Further characteristics of the invention will become clearer from the detailed description below, which refers to a merely illustrative, not limiting, embodiment, shown in the enclosed figures, wherein:

Fig. 1 is a diagrammatic block view that shows the input data of the method for cryptography according to the invention;
Fig. 2 is a diagrammatic block view that shows the generation of a counter text sequence starting from an initial sequence;
Fig. 3 is a Cartesian diagram that shows a sheaf of encryption curves that give the position value of the bytes to be inserted in the counter text according to the passkey;
Fig. 4 is a block diagram that shows the generation of the counter text and the generation of the notations of memory starting from the initial sequence;
Fig. 5 is a diagrammatic block view that shows the coding of a block of the binary file to be coded; and
Fig. 6 is a diagrammatic block view that shows the decoding of an encrypted block.

The method for cryptography of the invention is described with reference to the figures.

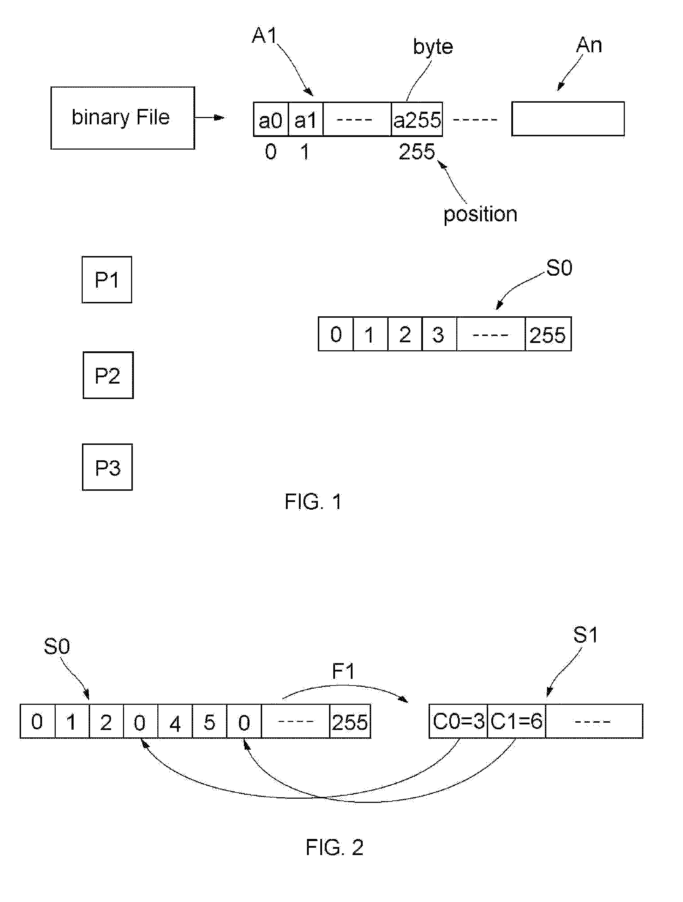

Referring to Fig. 1, the input data of the method for cryptography is illustrated. Said input data comprises a binary file to code, at least one coding and decoding passkey (P1, P2, P3) inserted by the user and an initial sequence (S0) of 256 bytes.

The binary file can be of any length and is divided in blocks, strings or arrays (A1, ... An) of 256 bytes. Obviously, if the binary file is not divisible by 256, there will be a block with a number of bytes lower than 256.

As it is known, a byte is formed of 8 bits, therefore it can have $2^8 = 256$ values. Therefore, a block of 256 bytes comprises 256 storage locations, and one byte is stored in each storage location, with value from 0 to 255. This means that each block has byte $a_0$ in position 0, bit $a_1$ in position 1 and so on, up to bit $a_{255}$ in positions 255.

Preferably, three passkeys are sufficient to ensure an excellent compromise between calculation speed and decoding difficulty. In any case, the maximum number of passkeys must not exceed 256. The limit of 256 passkeys is an arbitrary value. Conceptually, the program would also word with more passkeys, but the maximum number of usable notations of memory is 256 - one for each byte - as explained below.

Each passkey (P1, P2, P3) is composed of an integer of at least one digit. Preferably, an integer of nine digits is used.

The first step provides for generation of a counter text that is a sequence of bytes that will be used as reference for coding.

The initial sequence (S0) is composed of one string of 256 bytes in increasing order from 0 to 255. Therefore, the byte with value 0 is in position 0, the byte with value 1 is in position 1 and so on, up to byte with value 255 in position 255.

Referring to Fig. 2, the first processing step of the encryption algorithm consists in reordering the initial sequence (S0) in a new sequence (S1) (called counter text). The counter text sequence is obtained by transcribing in an ordered way (from position 0 to position 255) the values contained in the position obtained by applying a generic formula (F = f (P)) according to the passkey (P).

$$F = f(P) = c = ((P)^2 / (i * z + 1)) + ((P * z) / i + (z * i)$$

where

P is the passkey

i is a control variable that ranges from 1 to 256, that is corresponds to the number of bytes of the initial string (S0);

$z_i = z_{i-1} + i$; [z=0 with i=1, then increasing i it is added to z,

i=1, z=1; i=2, z=1+2=3; i=3, z=6; i=4, z=10;

therefore i ranges from 1 to 256, and z ranges from 1 to $z_i=z_{i-1}+256$]

c is the position value obtained from the formula (F) that is inserted in the counter text string in an ordered way after being suitably reduced.

For example, in case of one passkey (P1) only, the passkey (P1) is used to go from the initial sequence (S0) to the counter text sequence (S1), therefore obtaining:

$$F1 = f(P1) = c = ((P1)^2 / (i * z + 1)) + ((P1 * z) / i + (z * i)$$

Obviously, the position value (c) must assume 256 values of integers to cover all positions of the initial string (S0). Therefore, the position value (c) is appropriately reduced until it is lower than or equal to 256, applying the following subtraction formula (R).

c = c - prime numbers;

where

prime numbers for even bytes has the following values, used passing to the next one (in decreasing order) every time prime numbers > c (because c must be always higher than 0 and lower than 256):

{28444444444414,

2844444444398,

284444444399,

28444444373,

2844444391,

284444411,

28444393,

2844397,

284413,

28409,

2819,

256}

instead prime numbers for odd bytes:

{28333333333286,

2833333333309,

283333333291,

28333333307,

2833333267,

283333289,

28333301,

2833291,

283277,

28297,

2803,

255}

Each number is subtracted many times until prime numbers < c, given the last values of the two series c < 256 is obtained.

Following is a numerical example considering a simple case with passkey P1 = 100.

For i = 1 we obtain

$$z = 0 + 1;$$

$$c_0 = (100^2/(1*1+1)) + (100 * 1) / 1 + (1*1) = 5101$$

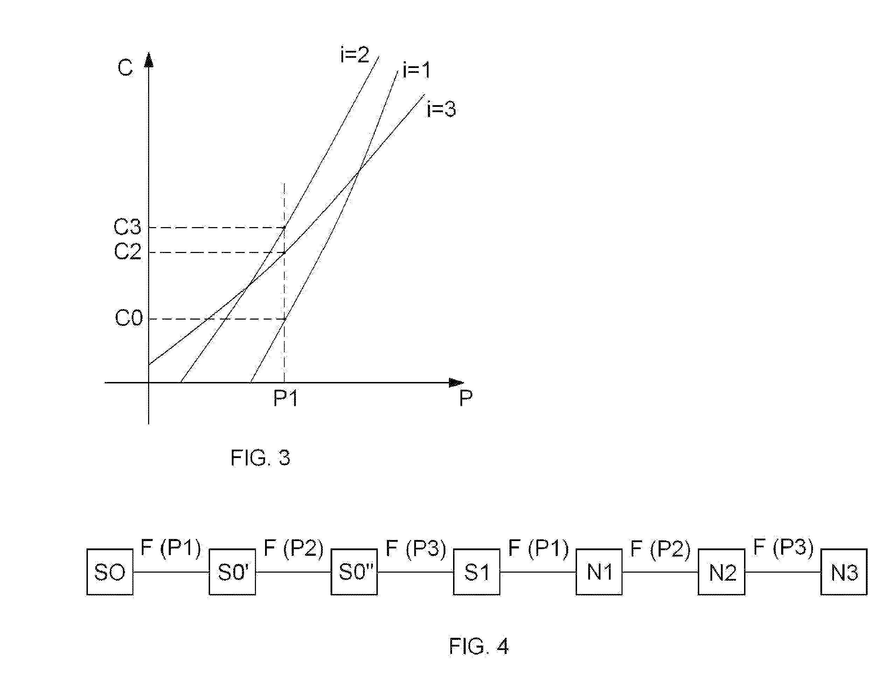

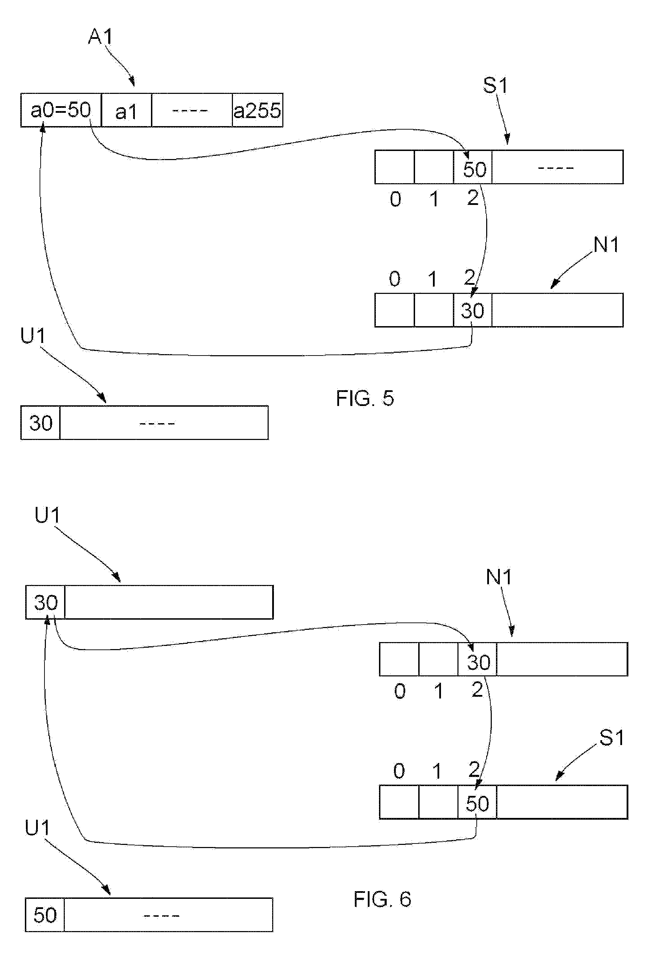

This $c_0$ value is reduced by applying the subtraction formulas (R)
$c_0$ = 5101 - 2819 = 2282 < 2819, then we pass to 256
$c_0$ = 2282 - 256 = 2026 > 256 then it is repeated.
In this way we obtain $c_0$ = 234, which is the position of the first value to be transcribed from SO at the first storage location of the counter text (S1). The calculation is continued for i = 2 and so on, until the counter text sequence (S1) is filled in an ordered way.
Referring to Fig. 3, the formula (F1) defines a sheaf of parabolas (from i = 1 to i = 256) on a Cartesian axes system with the passkey value (P) as abscissa and the position value (c) as ordinate. A corresponding position value ($c_0$) of the first parabola (i = 1) is calculated at the determined value of the first passkey (P1). Such position value ($c_0$) is reduced by using the aforesaid subtraction formula and the value of SO at position $c_0$ is inserted in the first position of the counter text string (S1).
As shown in Fig. 2, for example, after applying the subtraction formula (R), the first position value ($c_0$) is equal to 3. In such a case, the byte 3 of the initial string (S0) is cancelled and replaced with value 0.
After making said first transcription of the first position value ($c_0$) in the counter text string (S1) and after cancelling the bytes in the initial string (S0), the control variable (i) is increased by one. Then, the second position ($c_1$) is calculated with the formula (F), the value of the second position ($c_1$) is inserted in the second position of the counter text string (S1) and the byte in value position ($c_1$) is cancelled in the initial string (S0). Fig. 2 shows the numerical example wherein $c_1$ = 6.
Evidently, as the bytes of the initial string (S0) are cancelled (replaced with zero), the probability of finding a zero in the first string increases. Therefore, it is very probable that the byte zero is in the first positions of the counter text (S1).
To avoid such a drawback, if in the position (cx) obtained the byte of the initial string (S0) is equal to zero, the position value (cx) is increased to the subsequent value different from 0. If the end of the string is reached (cx = 256), it is necessary to start from the first one again and continue normally. The byte zero of the initial string (S0) is transcribed in the counter text string (S1) only after said byte zero is found in the initial string (S0) for a predetermined number of times, for example 11 times. Evidently, the counter text string (S1) will contain 256 different integer values arranged in a disordered way, i.e. all possible values that can be assumed by a byte.
Said ordering procedure of the initial string (S0) is carried out as many time as the number of passkeys (P1, P2, P3), where the string to be ordered is the previous one.
Fig. 4 shows an example with three passkeys. Starting from the initial string (S0) the function is applied with the first passkey (F(P1)). The function is applied to the first string (SO') with the second passkey (F(P2)) and a second string (S0") is obtained. The function is applied to the second string (S0") with the last passkey (F(P3)) and the counter text (S1) is obtained. So, a number of passages equal to the number of passkeys must be made in order to obtain the counter text (S1).
Still referring to Fig. 4, the formula (F(P1)) is applied to the counter text (S1) in function of the first passkey in order to obtain a first notation of memory ($N_1$). The formula (F(P2)) is applied to the first notation of memory ($N_1$) in function of the second passkey in order to obtain a second notation of memory ($N_2$). The formula (F(P3)) is applied to the second notation of memory ($N_2$) in function of the third passkey in order to obtain a third notation of memory ($N_3$). This process is repeated until the passkeys are finished.
So, a matrix of notations of text is obtained, with a number of rows (S1, N1, N2, N3) equal to the number of passkeys +1 and a number of columns equal to 256.
After creating a counter text array (S1) and a matrix of notations of memory (N1, N2, N3), the binary file can be coded.
As shown in Fig. 5, we start with the first block (A1) of 255 bytes of the binary file; the initial block (A1) must be coded in a coded block (U1).
For example, in the initial position 0 the block (A1) has a byte value of $a_0$ = 50. The value 50 is searched in the counter text (S1) and it is found, for example, that such a value 50 is in position 2. Then, the value contained in position 2 of the first notation of memory (N1) is read, for example, this value is 30. So, value 30 is transcribed in position 0 of the coded block (U1).
Clearly, the reading of values in the notations of memory (N1, N2, N3) is alternated between all notations of memory.

To further complicate the possibility of fraudulent decoding, when passing on to code the following block (A2), the passkeys (P1, P2, P3) are increased by 1 in order not to use always the same passkeys to code the different blocks. For example, only one of the passkeys is increased at a time, but the passkeys are alternated at every block to be coded (A2, P1+1; A3, P2+1; ...).

Decoding is perfectly symmetrical to coding. In fact, it is necessary to proceed in reverse order, as shown in Fig. 6. Value 30 is searched in the first notation of memory (N1) and the position of this value is detected. The value of the counter text (S1) in the detected position is read and the read value is transcribed in the decoded block (Z1). In this way, a decoded block (Z1) identical to the corresponding block (A1) of the binary file is obtained.

Numerous variations and modifications can be made to the present embodiment of the invention by an expert of the art, while still falling within the scope of the invention as claimed in the enclosed claims. For example, the coding and decoding functions can be inverted.

**Claims**

1. Method for cryptography of a binary file comprising the following steps:

   a) decomposition of the binary file in a plurality of blocks (A1, ... An) composed of one byte string,
   b) insertion of at least one passkey (P1, P2, P3) composed of an integer of at least one digit,
   c) generation of an initial sequence (S0) composed of a string of 256 bytes in increasing order,
   d) use of a function (F) that returns a position value (c) according to the passkey (P1, P2, P3) used, upon variation of a control variable (i) that ranges from 1 to 256,
   e) generation of at least one counter text (S1) composed of one string of 256 bytes starting from the initial sequence (S0), applying the passkey (P1, P2, P3) to the function (F) and including the position values (c) obtained in the counter text in an ordered way,
   f) generation of at least one notation of memory (N1, N2 N3) composed of one string of 256 bytes starting from the counter text (S1), applying the passkey (P1, P2, P3) to the function (F) and including the position values (c) obtained in the notation of memory in an ordered way,
   g) search of the byte values of each block (A1, .. An) of the binary file in the counter text (S1), in such a way to find the corresponding position of the searched byte in the counter text,
   h) reading in the notation of memory (N1, N2, N3) of the byte value at the position found in the counter text, and
   i) replacement in the block (A1, .. An) of the binary type of the initial byte with the corresponding byte read in the notation of memory (N1, N2, N3), in such a way to obtain a coded block (U1).

2. Method as claimed in claim 1, **characterized in that** said coded block (U1) is decoded by means of the following steps:

   l) search of the byte values of the coded block (U1) in the notation of memory (N1, N2, N3) in such a way to find the corresponding position of the searched byte in the notation of memory,
   m) reading of the byte value in the counter text (S1) at the position found in the notation of memory, and
   n) replacement in the coded block (U1) of the initial byte with the corresponding byte read in the counter text (S1), in such a way to obtain a decoded block (Z1) that corresponds to the relevant block (A1) of the binary file.

3. Method as claimed in claim 1 or 2, **characterized in that** it comprises at least three passkeys (P1, P2, P3) wherein each passkey is composed of an integer of nine digits.

4. Method as claimed in any one of the above claims, **characterized in that** said functions (F) that return a position value (c) according to the passkey (P1, P2, P3) upon variation of the control variable (i) are a sheaf of parabolas.

5. Method as claimed in claim 4, **characterized in that** said function (F) is given by

$$F = f(P) = c = ((P)^2 / (i * z + 1)) + ((P * z) / i + (z * i)$$

Where
P is the passkey
i is the control variable that ranges from 1 to 256, that is to say corresponds to the byte number of the start string (S0);
$z_i = z_{i-1} + i$; ($z=0$ with $i=1$, then increasing i it is added to z,

$$i=1, z=1; \quad i=2, z=1+2=3; \quad i=3, z=6; i=4, z=10;$$

therefore as i ranges from 1 to 256, z ranges from 1 to $z_{256} = z_{255} + 256$)

6. Method as claimed in any one of the above claims, **characterized in that** said position value (c) obtained from the function (F) according to the passkey is reduced until it is lower or equal to 256, applying suitable subtraction formulas (R).

7. Method as claimed in claim 6, **characterized in that** said subtraction formulas (R) are:
   c = c - prime numbers;
   where
   prime numbers for even bytes has the following values, used passing to the next one (in decreasing order) every time prime numbers > c (because c must be always higher than 0 and lower than 256):

$$\{28444444444414,$$
$$2844444444398,$$
$$284444444399,$$
$$28444444373,$$
$$2844444391,$$
$$284444411,$$
$$28444393,$$
$$2844397,$$
$$284413,$$
$$28409,$$
$$2819,$$
$$256\}$$

instead prime numbers for odd bytes:

{28333333333286,

2833333333309,

283333333291,

28333333307,

2833333267,

283333289,

28333301,

2833291,

283277,

28297,

2803,

255}

Each number is subtracted for as many times until prime numbers < c, given the last values of the two series c < 256 is obtained.

8.  Method as claimed in any one of the above claims, **characterized in that** said generation of the counter text (S1) starting from the initial sequence (S0) provides for cancellation of the bytes of the initial sequence (S0) equal to the position value (c) found, replacing the bytes to be cancelled with zeros, wherein the zero cancellation bit is transcribed in the counter text string (S1) only after said zero bit has been found in the start sequence (S0) for a predetermined number of times.

9.  Method as claimed in any one of the above claims, **characterized in that** said generation of the notation of memory (N1, N2, N3) starting from the counter text (S1) provides for cancellation of the counter text bytes equal to the position value (c) found, inserting zeros in correspondence of the bytes to be cancelled, the zero cancellation byte is transcribed in the notation of memory ($A_{11}$, .... $A_{33}$) only after said zero byte has been found in the counter text (S1) for a predetermined number of times.

10. Method as claimed in any one of the above claims, **characterized in that** said search (g) of the byte values of each block (A1, .. An) of the binary file in the counter text (S1) is made alternately in all counter texts obtained and said reading (h) in the notation of memory (N1, N2, N3) of the byte value at the position found in the counter text is made alternately in all notations of memory obtained.

FIG. 1

FIG. 2

EP 2 395 697 A1

FIG. 3

FIG. 4

A1

| a0=50 | a1 | ---- | a255 |

S1

| | | 50 | ---- |
| 0 | 1 | 2 | |

N1

| 0 | 1 | 2 | |
| | | 30 | |

U1

| 30 | ---- |

FIG. 5

U1

| 30 | |

N1

| | | 30 | |
| 0 | 1 | 2 | |

S1

| 0 | 1 | 2 | |
| | | 50 | |

U1

| 50 | ---- |

FIG. 6

Europäisches
Patentamt

European
Patent Office

Office européen
des brevets

# EUROPEAN SEARCH REPORT

**Application Number**

EP 11 16 9661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 189 970 A (BRITISH BROADCASTING CORP BRITISH BROADCASTING CORP [GB]) 4 November 1987 (1987-11-04) * abstract * * page 1, left-hand column, line 1 - page 2, right-hand column, line 83 * * figures 1,2 * ----- | 1-10 | INV. H04L9/06 |
| A | US 5 778 074 A (GARCKEN KNUTE T [US] ET AL) 7 July 1998 (1998-07-07) * abstract * * column 2, line 21 - column 5, line 28 * ----- | 1-10 | |
| A | US 4 168 396 A (BEST ROBERT M) 18 September 1979 (1979-09-18) * abstract * * column 2, line 54 - column 7, line 63; figure 1 * ----- | 1-10 | |
| T | Unknown: "Shuffling", Wikipedia - the free encyclopedia, 15 August 2011 (2011-08-15), pages 1-6, XP55005145, Retrieved from the Internet: URL:http://en.wikipedia.org/wiki/Shuffling [retrieved on 2011-08-18] * "Shuffling algorithms"; page 4 * ----- | 1-10 | TECHNICAL FIELDS SEARCHED (IPC) H04L |
| T | Unknown: "S-Box", Wikipedia, the free encyclopedia, 23 July 2011 (2011-07-23), pages 1-2, XP55005148, Retrieved from the Internet: URL:http://en.wikipedia.org/wiki/S-box [retrieved on 2011-08-18] * the whole document * ----- -/-- | 1-10 | |

The present search report has been drawn up for all claims

| Place of search | Date of completion of the search | Examiner |
|---|---|---|
| Munich | 18 August 2011 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 11 16 9661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/120521 A1 (HENSON KEVIN M [US] ET AL) 24 June 2004 (2004-06-24) <br> * abstract * <br> * paragraphs [0007] - [0014] * <br> ----- | 1-10 | |
| A | US 5 214 704 A (MITTENTHAL LOTHROP [US]) 25 May 1993 (1993-05-25) <br> * abstract * <br> * column 1, line 1 - column 2, line 57 * <br> ----- | 1-10 | |

TECHNICAL FIELDS
SEARCHED       (IPC)

The present search report has been drawn up for all claims

| Place of search | Date of completion of the search | Examiner |
|---|---|---|
| Munich | 18 August 2011 | Di Felice, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 16 9661

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2011

| Patent document cited in search report | | Publication date | Patent family member(s) | | Publication date |
|---|---|---|---|---|---|
| GB 2189970 | A | 04-11-1987 | EP | 0265477 A1 | 04-05-1988 |
| | | | WO | 8706786 A1 | 05-11-1987 |
| | | | JP | 1500227 T | 26-01-1989 |
| | | | JP | 2709065 B2 | 04-02-1998 |
| | | | US | 4937574 A | 26-06-1990 |
| US 5778074 | A | 07-07-1998 | NONE | | |
| US 4168396 | A | 18-09-1979 | NONE | | |
| US 2004120521 | A1 | 24-06-2004 | NONE | | |
| US 5214704 | A | 25-05-1993 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1895707 B1
- EP 1456997 B1